# EUROPEAN PATENT APPLICATION

(11) **EP 4 443 301 A1**
(43) Date of publication of application: **09.10.2024**
(21) Application number: 24168401.8
(22) Date of filing: 04.04.2024
(51) Int. Cl.: G06F 11/32, G06F 11/34, G06F 18/2433

(54) **ANOMALY ALERTS ACCREDITATION**

(30) Priority: 04.04.2023 US 202318130596
(71) Applicant: GOOGLE LLC, Mountain View CA 94043 (US)
(72) Inventor: ANJANEYULU, Harish Kumar Bheemarthi, London (GB)
(74) Representative: Morrall, Jonathan Ian McLachlan

(57) **Abstract**

The technology is generally directed to generating an alert based on a direction and depth of a detected anomaly. The direction of the anomaly may provide an indication as to whether the anomaly is broadening or normalizing, and the depth of the anomaly may provide an indication of the magnitude of the direction as compared to the detected anomaly. The direction may be positive, indicating that the anomaly is normalizing or moving towards an expected value, or negative, indicating that the anomaly is broadening or moving further from the expected value. Based on the determined direction and depth, a trend of the anomaly may be determined. A normalizing trend may indicate that the anomaly is likely to normalize and, therefore, an alert is not necessary. A broadening trend may indicate that the anomaly is likely to broaden and, therefore, an alert should be generated.

## Description

### BACKGROUND

Anomalies are typically detected when there is a deviation from what is standard, normal, or expected. However, the deviation is typically detected by reviewing trends in historical data, by which time the anomalous event has ended. In response to the detection of the anomaly, anomaly alerts are typically generated, with little to no consideration of other factors, such as what has happened since the anomaly was detected. The number of anomaly alerts a user may receive can become inundating. Moreover, the anomaly alert may not be necessary if, after the anomaly is detected, there have been changes to the trends or other data such that the detected anomaly is no longer relevant, anomalous, and/or concerning. The unnecessary anomaly alert may waste computational resources as well as cause users to look into an anomaly that may have self corrected.

### BRIEF SUMMARY

The technology is generally directed to generating an alert based on a direction and depth of a detected anomaly. The direction of the anomaly may provide an indication as to whether the anomaly is broadening or normalizing and the depth of the anomaly may provide an indication of the magnitude of the direction as compared to the detected anomaly. The direction may be positive, indicating that the anomaly is normalizing or moving towards an expected value, or negative, indicating that the anomaly is broadening or moving further from the expected value. Based on the determined direction and depth, a trend of the anomaly may be determined. A normalizing trend may indicate that the anomaly is likely to normalize and, therefore, an alert is not necessary. A broadening trend may indicate that the anomaly is likely to broaden and, therefore, an alert should be generated.

One aspect of the technology is directed to a method, comprising detecting, by one or more processors, an anomaly for data in a predetermined period of time, detecting, by the one or more processors, a direction of the detected anomaly, wherein the direction includes a positive direction or a negative direction, wherein the positive direction indicates that the detected anomaly is normalizing, wherein normalizing corresponds to the anomaly moving toward an expected value, wherein the negative direction indicates that the detected anomaly is broadening, and wherein broadening corresponds to the anomaly moving away from the expected value, detecting, by the one or more processors, a depth of the detected direction of the detected anomaly, determining, by the one or more processors based on the detected direction and depth, a trend for the detected anomaly, wherein the trend is a normalizing trend or a broadening trend, and providing, by the one or more processors, an alert when the determined trend is the broadening trend.

The depth of the determined direction of the detected anomaly may be a magnitude of the direction as compared to a threshold. The threshold may correspond to a value of the detected anomaly.

Determining the trend for the detected anomaly may further include determining, by the one or more processors, whether the detected direction or depth broadens the detected anomaly. The method may further comprise determining, by the one or more processors, the broadening trend when the detected direction broadens the detected anomaly and the detected depth normalizes the detected anomaly. The method may further comprise determining, by the one or more processors, the broadening trend when both the detected direction and the detected depth broadens the detected anomaly.

Detecting the direction of the detected anomaly may include comparing, by the one or more processors, the detected anomaly in the predetermined period of time to a previous value for previous data from a previous predetermined period of time. The detected direction may be the positive direction when the detected anomaly is normalizing as compared to the previous value, and the detected direction may be the negative direction when the detected anomaly is broadening as compared to the previous value.

Detecting the depth of the determined direction may include comparing, by the one or more processors, the detected anomaly in the predetermined period of time to a second period of time that includes the predetermined period of time.

Another aspect of the technology includes a system, comprising one or more processors. The one or more processors may be configured to detect an anomaly for data in a predetermined period of time, detect a direction of the detected anomaly, wherein the direction includes a positive direction or a negative direction, wherein the positive direction indicates that the detected anomaly is normalizing, wherein normalizing corresponds to the anomaly moving toward an expected value, wherein the negative direction indicates that the detected anomaly is broadening, and wherein broadening corresponds to the anomaly moving away from the expected value. The one or more processors may be further configured to detect a depth of the determined direction of the detected anomaly, determine, based on the determined direction and depth, a trend for the detected anomaly, wherein the trend is a normalizing trend or a broadening trend, and provide an alert when the determined trend is the broadening trend.

Yet another aspect of the technology is directed to a non-transitory computer-readable storage medium, the computer-readable storage medium including instructions that when executed by one or more processors, cause the one or more processors to detect an anomaly for data in a predetermined period of time, detect a direction of the detected anomaly, wherein the direction includes a positive direction or a negative direction, wherein the positive direction indicates that the detected anomaly is normalizing, wherein normalizing corresponds to the anomaly moving toward an expected value, wherein the negative direction indicates that the detected anomaly is broadening, and wherein broadening corresponds to the anomaly moving away from the expected value, detect a depth of the determined direction of the detected anomaly, determine, based on the determined direction and depth, a trend for the detected anomaly, wherein the trend is a normalizing trend or a broadening trend, and provide, by the one or more processors, an alert when the determined trend is the broadening trend.

### BRIEF DESCRIPTION OF THE DRAWINGS

FIG. 1 illustrates an example anomaly alert generated in response to a detected anomaly having a broadening trend in accordance with aspects of the disclosure.
FIG. 2 illustrates example anomalies in accordance with aspects of the disclosure.
FIG. 3A is an example graph used to determine the direction of an anomaly in accordance with aspects of the disclosure.
FIG. 3B is another example graph used to determine the direction of an anomaly in accordance with aspects of the disclosure.
FIG. 4 is an example graph used to determine the depth of the direction of an anomaly in accordance with aspects of the disclosure.
FIG. 5 is an example graph used to detect an anomaly in accordance with aspects of the disclosure.
FIG. 6 is an example graph used to determine the direction of the anomaly detected in FIG. 5 in accordance with aspects of the disclosure.
FIG. 7 is an example graph used to determine the depth of the anomaly detected in FIG. 5 in accordance with aspects of the disclosure.
FIG. 8 illustrates example trend predictions for detected anomalies in accordance with aspects of the disclosure.
FIG. 9A is a block diagram of an example system in accordance with aspects of the disclosure.
FIG. 9B is a pictorial diagram of the example system of FIG. 9A
FIG. 10 illustrates an example method of generating anomaly alerts in accordance with aspects of the disclosure.

### DETAILED DESCRIPTION

The technology is generally directed to generating anomaly alerts based on a direction and depth of a detected anomaly. The direction of the anomaly may indicate whether the anomaly, within a predetermined period of time, displays a momentum of normalizing or broadening the anomaly. The direction of the anomaly may be positive or negative. A positive direction may indicate that the anomaly is normalizing such that the detected anomaly is moving toward an expected value whereas a negative direction may indicate that the anomaly is broadening such that the anomaly is moving away from the expected value. The depth of the anomaly may indicate whether the direction of the anomaly is significant enough to normalize the anomaly, without need for intervention. Based on the determined direction and depth, a trend of the anomaly may be determined. The trend may be broadening or normalizing. A broadening trend may indicate that the anomaly is likely to broaden or continue to broaden and an alert should be generated for the anomaly. A normalizing trend may indicate that the anomaly is likely to normalize or continue to normalize, without intervention, and there is no need to generate an alert for the anomaly.

Generating an alert only when the direction and depth of the anomaly indicate that the anomaly is broadening, instead of normalizing, may minimize the computational resources for generating and transmitting alerts. For example, rather than transmitting an alert each time an anomaly is detected, the number of alerts may be minimized by only generating and transmitting an alert when the anomaly meets certain conditions, *e.g.,* the anomaly is determined to be broadening based on the depth and direction. Generating and transmitting an alert only when the anomaly meets certain conditions increases computational efficiency by reducing processing power in generating the alerts, reducing bandwidth in transmitting the alerts, etc. Further, the alerts that are generated when the direction and depth of the anomaly indicate that the anomaly is broadening may be specific, actionable alerts. This may allow users to address only anomalies that are broadening, without having to consider anomalies that are normalizing.

Additionally or alternatively, by generating an alert only when the anomaly is determined to be broadening based on its direction and depth, an alert may not be generated for transient anomalies. This may mitigate the number of alerts transmitted for anomalies that self correct or will resolve without user intervention. Further, by generating an alert only when the anomaly is determined to be broadening based on its direction and depth, larger interventions, such as a shut down of the system, may not have to be implemented. This may allow for the system to continue functioning properly.

According to some examples, the systems and methods described herein may be used in systems that sustain repeated anomalies due to self correcting loops and/or transient external events. Self correcting loops may include, for example, feedback loops that are implemented to mitigate anomalies and transient external events may include, for example, an overloaded telecommunications network. By generating an alert only when the direction and depth of the anomaly indicate that the anomaly is broadening may bring attention only to those anomalies that require user and/or immediate attention or correction.

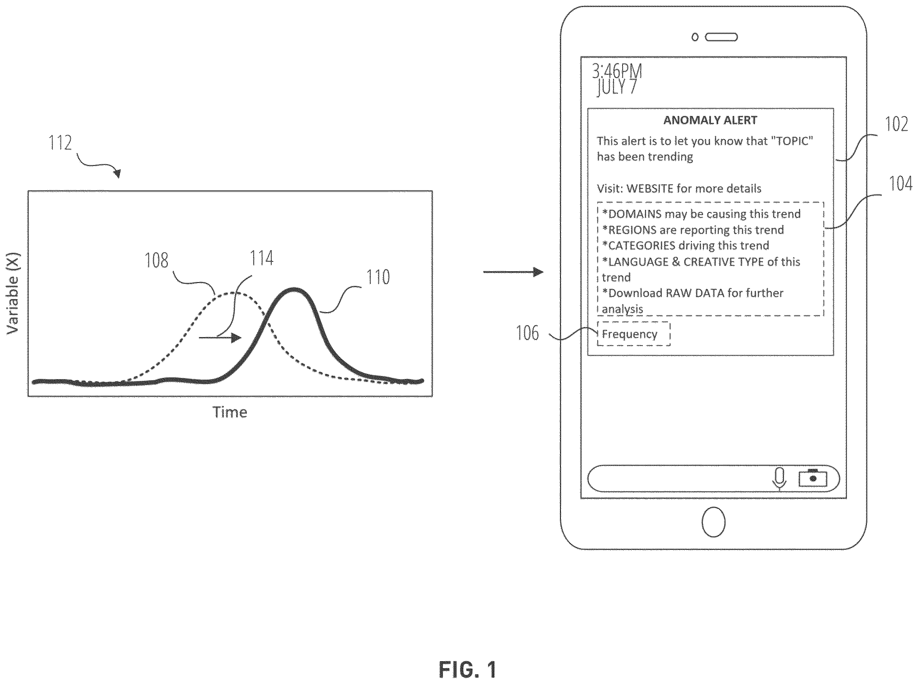

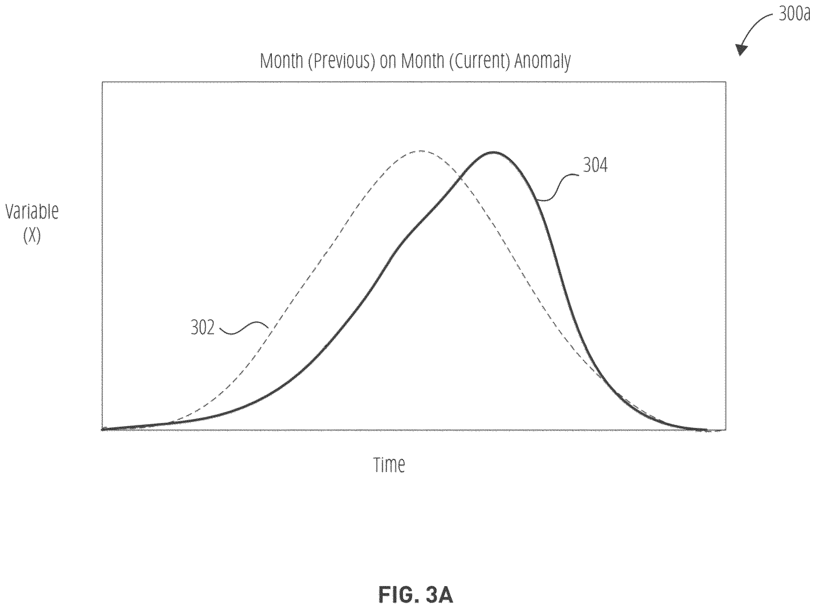

FIG. 1 illustrates an example of an anomaly alert generated in response to detecting a broadening anomaly. For example, when the trend of the detected anomaly is determined to be broadening, an alert may be generated. The anomaly alert 102 may include information related to the anomaly 110. As shown in graph 112, an anomaly 110 may be detected. The anomaly 110 may be detected as a deviation from a standard, normal, or expected value. The depth and direction of the depth of the anomaly may be determined, as described herein with respect to FIGs. 3A-4. The depth and direction may be used to determine the trend for the anomaly. The trend of the anomaly may be determined to be broadening or normalizing. A broadening trend 104 may indicate that the value of the anomaly is moving further away from the expected value 108 and does not show signs of normalizing on its own. A normalizing trend may indicate that the value of the anomaly 110 is moving towards the expected value 108 on its own.

As shown in FIG. 1, the trend of anomaly 110 may be a broadening trend 114. In response to determining the trend of the anomaly is a broadening trend 110, an anomaly alert 102 may be generated. According to some examples, the anomaly alert 102 may include an indication of the "topic" for which an anomaly was detected. The topic may be for example, restaurants, toys, shoes, hotels, books, etc. In some examples, the anomaly alert 102 may include what anomaly was detected, whether it was for the number of searches, clicks, policy violations, etc. related to the topic.

According to some examples, the anomaly alert 102 may include information 104 related to the anomaly 110. The information 104 may include links that, when selected, provide a pop-up or overlay of additional information. In some examples, when the links are selected, a new browser may open to provide the additional information. The information 104 may include, for example, domains causing the trend, regions reporting the trend, categories driving the trend, language and creative types of this trend, the ability to download raw data for further analysis, etc.

In some examples anomaly alert 102 may include an input to adjust the frequency 106 for receiving alerts regarding detected anomalies. For examples, the frequency of the alerts may be, for example, upon detection of a broadening trend 114 or a daily, weekly, monthly, etc. summary. Upon receiving an input corresponding to the selection of frequency 106, a pop-up or overlay may be provided to allow a user to adjust the frequency for receiving the anomaly alerts 102.

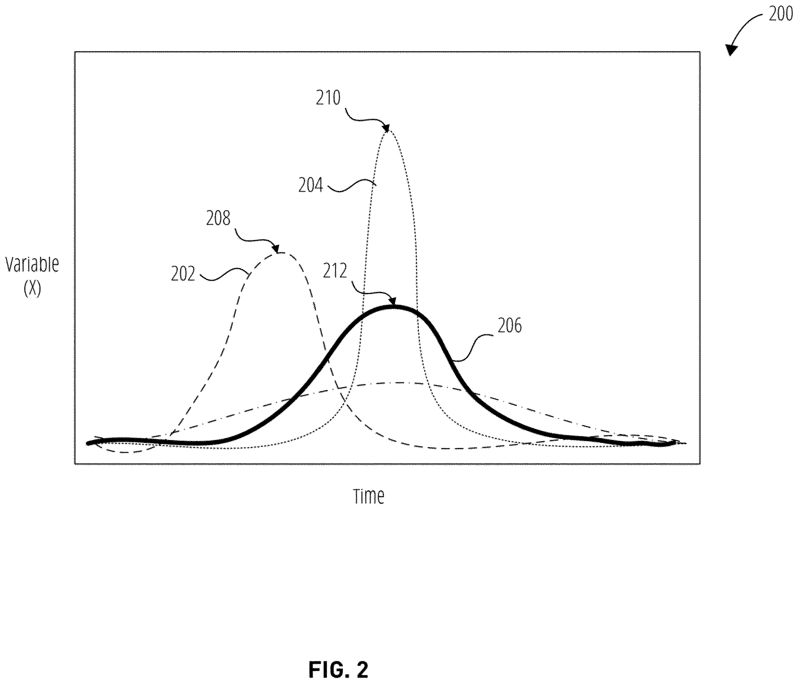

FIG. 2 illustrates example anomalies. Anomalies may be detected when the actual, measured value deviated from the standard, normal, or expected value. According to some examples, if the actual value of the anomaly deviates from the expected value by a predetermined threshold, the actual value may be determined to be an anomaly. In some examples, the anomaly may be detected over a predetermined period of time, such as a day, a week, a month, etc. For example, if the number of advertisements ("ads") generated for toys varies between 40-50 per day in a month but on a given day of the month the number of ads generated for toys is 80 or more, the 80 may be determined to be an anomaly. In such an example, the period of time may be a day, which is then compared to other days in the month. Further, in the example, the predetermined threshold may be a certain percentage, a standard deviation, etc. from the expected value of 40-50 per day, such that the actual value of 80 is determined to be an anomaly.

Graph 200 depicts a standard value 206 as well as two anomalies 202, 204. The anomalies 202, 204 may be detected when the actual value deviates from the standard value 206. For example, the peak 208 of anomaly 202 occurs at a time before the expected peak 212 of standard value 206. The peak 208 is also greater in value, as measured in "variable (X)", as compared to peak 212 of the standard value 206. Similarly, peak 210 of anomaly 204 is also greater in value as compared to peak 212 of the standard value 206. However, peak 210 of anomaly 204 occurs at a time substantially similar to the time of the expected peak 212 of the standard value. Anomalies 202, 204 may, in some examples, be determined by comparing their value with the standard value 206, the time their respective peaks 208, 210 occur as compared to the peak 212 of the standard value, etc.

After an anomaly is detected within the predetermined period of time, the direction of the detected anomaly may be determined. The direction of the anomaly provides an indication of whether the momentum, or trend, of the anomaly is normalizing or broadening the anomaly further. According to some examples, the direction of the anomaly is determined based on an end portion of the predetermined period of time. For example, if the anomaly is detected for a day within a month, the direction of the anomaly would be determined for the end portion of the month. If the anomaly shows signs of normalizing, such as trending towards the expected value, the direction may be determined to be positive. If the anomaly shows signs of broadening, such as moving further away from the expected value, the direction of the anomaly may be determined to be negative.

According to some examples, the direction of the anomaly may be determined based on the standard deviation of the anomaly for the predetermined period of time as compared to a corresponding or related period of time. For example, the standard deviation for the predetermined period of time, such as a month, may be compared to the standard deviation of the related period of time, such as the prior month. According to some examples, the standard deviations may be compared using Welch's t-test. The Welch's t-test is a statistical test used to compare the means of two groups. The Welch's t-test is a non-parametric test, which means that it does not make any assumptions about the distribution of the data. Welch's t-test is often used when the populations are not normally distributed.

According to some examples, the standard deviations may be compared using the Mann-Whitney U test. Similar to the Welch's t-test, the Mann-Whitney U test is a non-parametric test, and it can be used to compare the means of two groups. In some examples, the Mann-Whitney U test may be more sensitive to differences in the distributions of the data as compared to the Welch's t-test.

In another example, the standard deviations may be compared using a Wilcoxon signed-rank test. The Wilcoxon signed-rank test is also a parametric test, and it can be used to compare the means of two groups. In some examples, the Wilcoxon signed-rank test may be more powerful than the Mann-Whitney U test. The Wilcoxon signed rank test, however, may make assumptions about the distribution of the data.

The comparison may provide an indication of the magnitude of the anomaly. According to some examples, the comparison may provide an indication of the variance of the anomaly. The variance is a measure of how much the values in a set of data vary from the mean. According to some examples, variance is used to measure the dispersion of data and to compare the variability of two or more sets of data. More specifically, variance may measure how far each number in the set is from the mean (average), and thus from every other number in the set.

Variance is often depicted by this symbol: σ². The variance may be determined by taking the average of the squared differences from the mean. For example, the variance may be determined by first determining the differences between each number in the data set and the mean, then squaring the differences, such that the value becomes positive, and finally dividing the sum of the squares by the number of values in the data set. The square root of the variance may be the standard deviation (SD or σ). In some cases, risk or volatility may be expressed as a standard deviation rather than a variance because the former is often more easily interpreted. The variance may be extrapolated to determine whether the anomaly will normalize or broaden.

While the direction of the anomaly may be determined based on the standard deviation of the anomaly, the direction may, additionally or alternatively, be determined based on the variance, mean, or average.

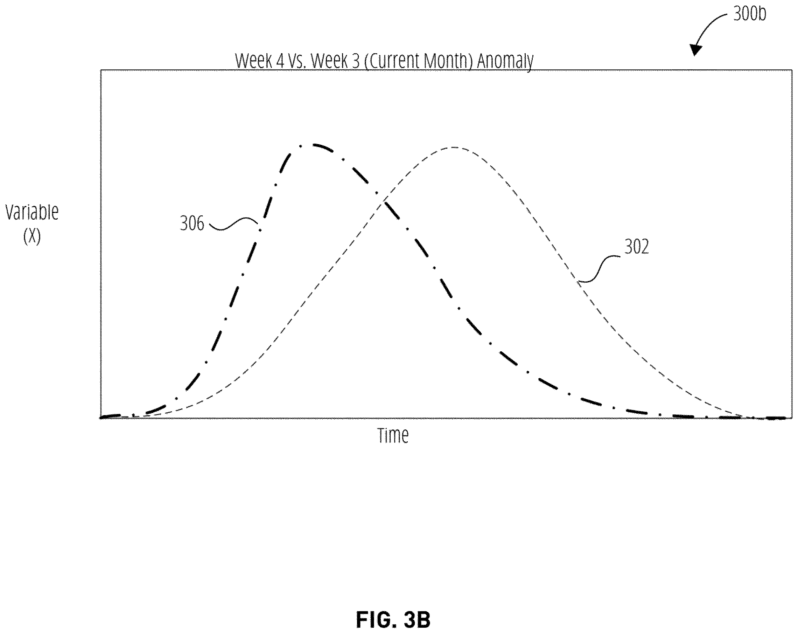

FIG. 3A and FIG. 3B illustrate an example for determining the direction of an anomaly. For example, FIG. 3A illustrates a graph 300a in which an anomaly 304 has been detected as compared to the standard value 302. The anomaly 304 may be detected over a period of time, such as a month. The anomaly of one week of the month may be compared to the anomaly of another week in the month to determine the direction of the anomaly. For example, the standard deviations for the month may be compared to the standard deviation of the previous month to determine a variance in the anomaly. The variance of the anomaly in week 4 may be compared with the variance of week 3 of the month to determine the direction of the anomaly. In examples where the comparison indicates that the direction is positive, the direction may indicate that the anomaly is normalizing. Alternatively, when the comparison indicates that the direction is negative, the direction may indicate that the anomaly is broadening.

FIG. 3B illustrates a graph 300b in which the anomaly of week 4 of the month has been compared to the anomaly of week 3 of the month. The comparison 306 may determine the direction of the anomaly. As shown in FIG. 3B, the comparison 306 indicates that the direction of the anomaly 304 is positive. The positive direction of the anomaly 304 may indicate that the anomaly 304 is normalizing.

According to some examples, the direction of the anomaly may be determined based on the variance values. For example, if a variance value of 6 was the observed anomaly, such as in the month-on-month comparison shown in FIG. 3A, the positive direction then would be the week-on-week anomaly of any number between -1 to -6, which would normalize the anomaly. However, if the week-on-week anomaly is above 0, the value of the anomaly will add to the variance, *e.g.,* increase the variance value. Increasing the variance value may broaden the anomaly, the direction of the anomaly may be negative. Increasing the variance value may include making the variance value more positive, such as increasing the variance value from 6 to 10, or more negative, such as increasing the variance value from -4 to -8.

After the direction of the anomaly is determined, the depth of the direction may be determined. The depth of the direction may be the magnitude of the direction as compared to the threshold. According to some examples, the threshold may be the observed anomaly. For example, when the anomaly is identified and the direction of the anomaly is determined as positive, the depth may be used to determine whether the positive direction of the anomaly is significant enough to normalize the overall anomaly.

The depth of the direction may indicate whether the direction of the anomaly is greater than a threshold such that the direction will normalize the anomaly. For example, the detected anomaly may be in week 3 of a given month and the direction of the anomaly may be positive. In such an example, if the anomaly of week 3 as compared with the anomaly of the overall current month indicates a normal distribution without any anomaly, then the depth of the detected positive direction may indicate that the direction of the anomaly is enough to normalize the current month anomaly. Alternatively, if the anomaly of week 4 as compared with the anomaly of the overall current month does not indicate a normal distribution, then the depth of the positive direction may indicate that the direction of the anomaly is not enough to normalize the current month anomaly. In such an example, an alert may be generated for the detected anomaly.

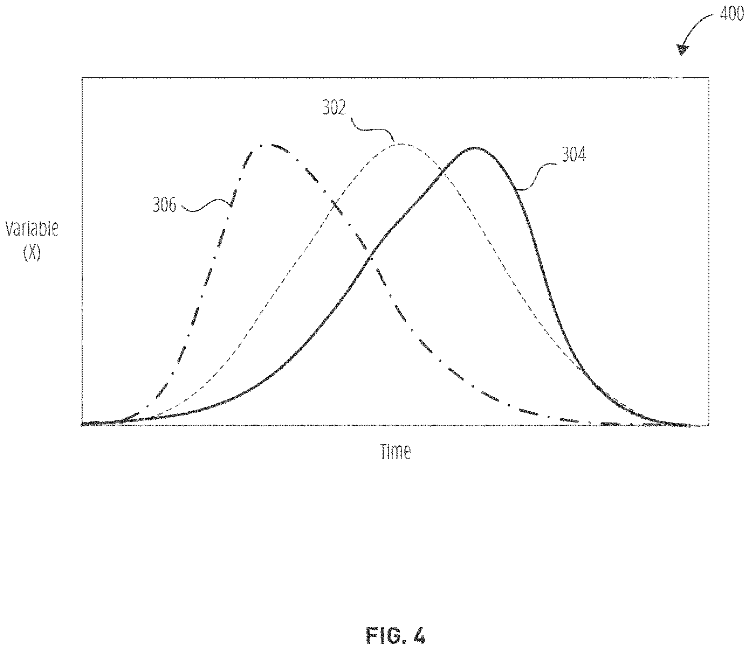

FIG. 4 illustrates a graph 400 in which the magnitude of the direction 306 is compared to the anomaly 304. For example, when the magnitude of the direction 306 as compared to the direction of the anomaly 304 results in a normal distribution 302, the depth, or the magnitude of the direction, can be considered to be significant enough to normalize the anomaly. In such an example, an alert would not be generated. However, if the depth, or the magnitude of the direction, of the anomaly when compared to the direction of the anomaly would not result in a normal distribution, an alert may be generated. In such an example, the depth would not be considered significant enough to normalize the anomaly.

An alert may be generated when the depth and direction indicate that the anomaly is not normalizing. For example, when the determined direction is negative, such that the anomaly is broadening, and the depth of the direction is also broadening, the trend of the anomaly may be broadening, such that the anomaly provides no indication of normalizing. In such an example, an alert may be generated.

In some examples, when the determined direction is broadening, but the depth of the direction is normalizing, an alert may be generated. As the depth of the direction is determined based on historical data, the depth may not provide an indication of whether the anomaly will normalize in the future. In such an example, the trend of the anomaly may be broadening, such that the anomaly is broadening. An alert may be generated in response to the determination of a broadening trend.

In examples where an anomaly alert is generated, the anomaly alert may be similar to the anomaly alert shown in FIG. 1. For example, the alert may provide an indication of the "topic" for which the anomaly was detected. In some examples, the alert may provide information as to why the anomaly was detected, e.g., whether it was for the number of search queries, clicks, policy violations, etc. for the given topic. Additionally or alternatively, the anomaly alert may provide additional information as to what may have caused the trend, where the trend is occurring, what is driving the trend, etc.

According to some examples, when the direction of the anomaly is positive, such that the anomaly is normalizing, and the depth of the direction is also normalizing, the trend of the anomaly may be determined to be normalizing. A normalizing trend may indicate that the anomaly is normalizing and an alert is not generated.

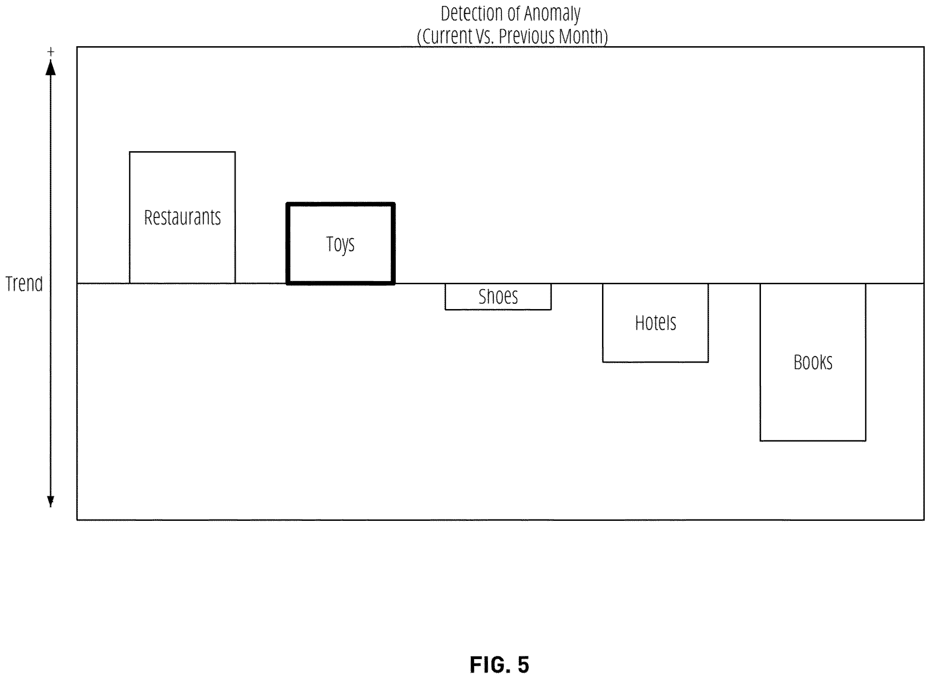

FIG. 5 illustrates trends for different topics. The trends may be, for example, a comparison of the number of searches, clicks, policy violations, etc. related to the topic for a current period of time to a corresponding previous period of time. As shown in FIG. 5, the trend for the topics may be a comparison of something that is tracked for the current month as compared to the previous month. For example, there may be a trend for an increased number of searches for restaurants and toys, but a trend for a decreased number of searches for shoes, hotels, and books based on a month-on-month comparison. An increase or decrease may indicate an anomaly.

The comparison may be based on number of searches, clicks, policy violations, advertisements presented, etc. The period of time may be an hour, day, week, month, etc. Comparing the number of searches for a topic for a current month to a previous month is, therefore, just one example and is not intended to be limiting.

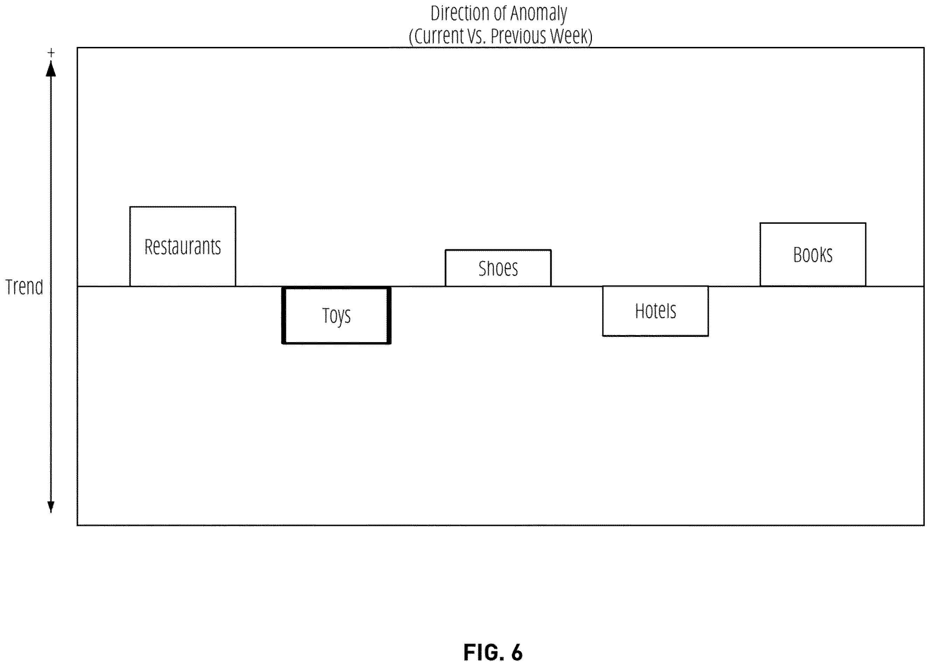

Continuing with the example of FIG. 5, FIG. 6 illustrates a direction of the detected anomalies. The anomalies in FIG. 5 were detected by comparing a value from the current month to a value of the previous month. The value may correspond to the number of searches, clicks, policy violations, advertisements presented, etc. The direction of the anomaly may be determined by comparing the value of on a week-by-week basis. For example, the value for week four of the current month may be compared with the value for week three of the current month. Using the topic of toys as an example, toys was upward trending month on month, as shown in FIG. 5, while it is downward trending in the week-on-week comparison. In this example, the upward trend for the month-on-month comparison and the downward trend for the week-on-week comparison may indicate that the direction of the anomaly is positive. The positive direction may indicate that, while the number of searches for toys increased in a month-to-month comparison, the week-on-week comparison is decreasing. The decreasing trend week to week may indicate that the anomaly is normalizing and, therefore, the direction of the anomaly is positive.

In contrast to toys, restaurants was upward trending month on month, as shown in FIG. 5, and also upward trending week on week, as shown in FIG. 6. The upward trend month on month and week on week may indicate a negative direction. The negative direction may indicate that the anomaly is growing, such that the anomaly is broadening or moving further away from the expected value.

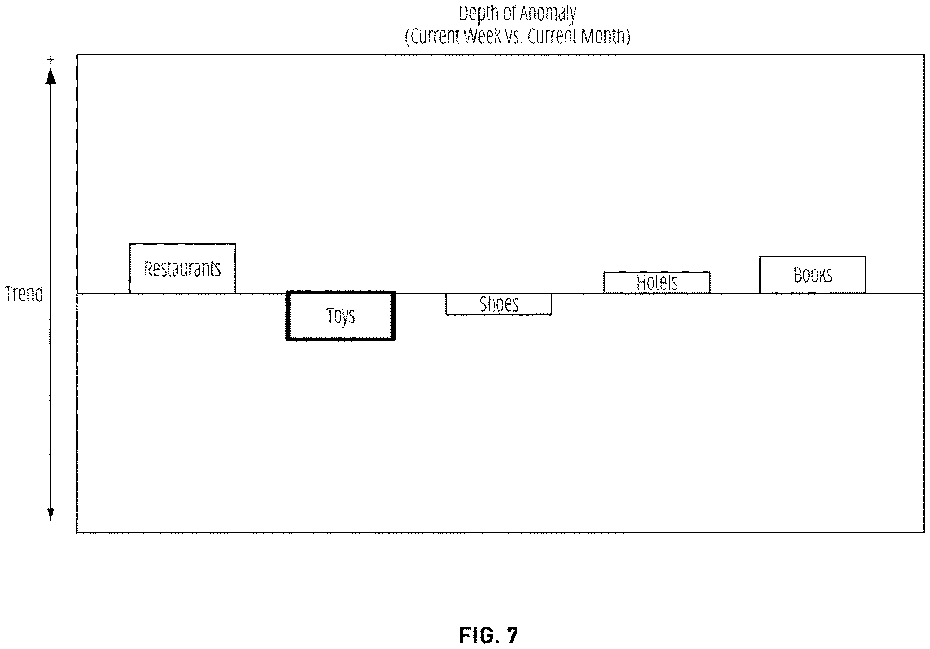

FIG. 7 illustrates a depth of the detected anomaly. The depth of the anomaly may be detected by comparing a value for a week of the current month to the current month. The comparison is similar to moving averages, which identifies how strong, or significant, the direction of a certain trend is. In some examples, the comparison may determine whether the depth of the direction is of a great enough magnitude to neutralize the detected anomaly.

As discussed with FIGs. 4 and 5, the topic toys was upward trending in the month-on-month comparison and downward trending in the week-on-week comparison. If the downward trend for the week-on-week comparison is of a great enough magnitude to neutralize the upward trend in the month-on-month comparison, the depth may be enough to neutralize the anomaly for toys. As shown in FIG. 7, toys is downward tending in a comparison of the value of a week to a month. This may indicate that the depth of direction is enough to neutralize the anomaly detected for toys. In examples where the depth of the direction is of a magnitude great enough to neutralize the anomaly, an alert may not be generated.

In contrast to toys, restaurants is upward trending based on a comparison of the value of a week to a month. This may indicate that the depth of direction is not enough to neutralize the anomaly. According to some examples, the depth of the direction of the anomaly for restaurants may indicate that the anomaly is broadening. In examples where the depth of the direction indicates that the anomaly is going to broaden, an alert may be generated for the anomaly.

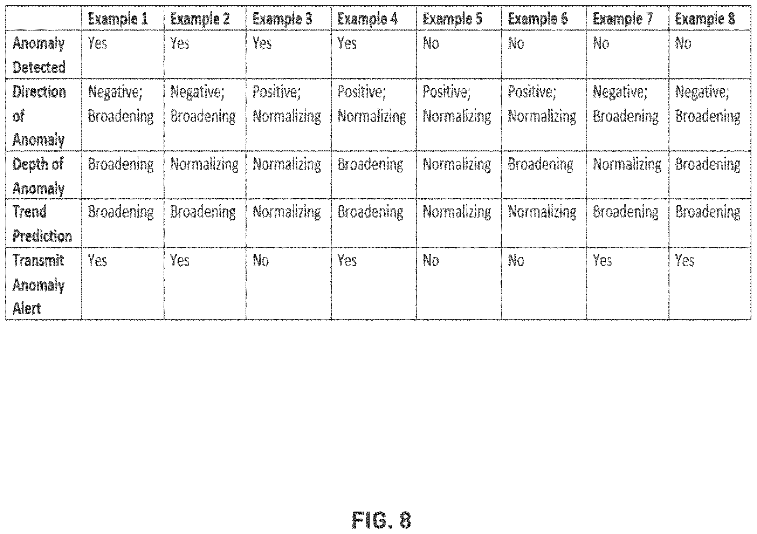

FIG. 8 illustrates a plurality of examples for determining whether to transmit an alert based on a detected anomaly.

In Example 1, an anomaly may be detected. The direction of the detected anomaly may be broadening, such that the anomaly is moving away from an expected value. The depth of the direction may be broadening, such that the depth is further adding the anomaly. In such an example, the trend prediction of the anomaly is broadening, such that the anomaly is and will continue to be broadening. The broadening trend may cause an alert to be generated for the anomaly.

In Example 2, an anomaly may be detected. The direction of the detected anomaly may be broadening. The depth of the anomaly may be normalizing, such that the depth indicates normalization of the anomaly. The depth of the anomaly is determined based on historical data, which may not provide an indication of the future of the anomaly. In such an example, the trend prediction of the anomaly may be broadening, such that the predicted trend is that the anomaly is and will continue to be broadening. The broadening trend may cause an alert to be generated for the anomaly.

In Example 3, an anomaly may be detected. The direction of the detected anomaly may be normalizing. The depth of the anomaly may be determined to be normalizing. In examples, such as this example, where both the depth and direction indicate that the detected anomaly is normalizing, an alert may not be generated.

In Example 4, an anomaly may be detected. The direction of the detected anomaly may be normalizing. The depth of the anomaly may be determined to be broadening. In examples where the direction of the anomaly is normalizing and the depth is broadening, the trend of the anomaly may be broadening, indicating that the detected anomaly is broadening. In such an example, an alert may be generated.

In Example 5, an anomaly is not detected. The direction and depth of the value for the given topic may be determined. For example, the direction of the value may be positive, indicating that the value is normalizing, normal, or substantially normal. In such an example, a normal or substantially normal value may be a value corresponding to an expected value. The depth of the direction may, for example, be determined to be normalizing. In examples where no anomaly is detected, the direction of the value is normalizing, and the depth is also normalizing, the trend of the value may be normalizing. In such an example, an alert may not be generated as there was no detected anomaly and no trend indicating an anomaly will occur.

In Example 6, an anomaly is not detected. The direction of the value may be positive, indicating that an anomaly is not being formed. The depth of the direction may be broadening. As no anomaly was detected and the direction of the anomaly indicates an anomaly is not forming, the trend of the value may be normalizing. In such an example, an alert may not be generated.

In Example 7, an anomaly is not detected. The direction of the value, however, is negative, indicating that the value is broadening, or moving away from an expected value. The direction may indicate that an anomaly is forming, or the value is moving towards becoming an anomaly. The depth of the value may be determined to be normalizing. As the depth of the value is based on historical data, the trend prediction of the value may be broadening, indicating that an anomaly is likely to occur. In such an example, an alert may be generated.

In Example 8, an anomaly is not detected. The direction of the value may be negative, indicating that the value is moving away from an expected value. The depth of the anomaly may be determined to be broadening. The trend prediction of the value may be broadening, such that an anomaly is likely to occur. In such an example, an alert may be generated even though an anomaly was not detected.

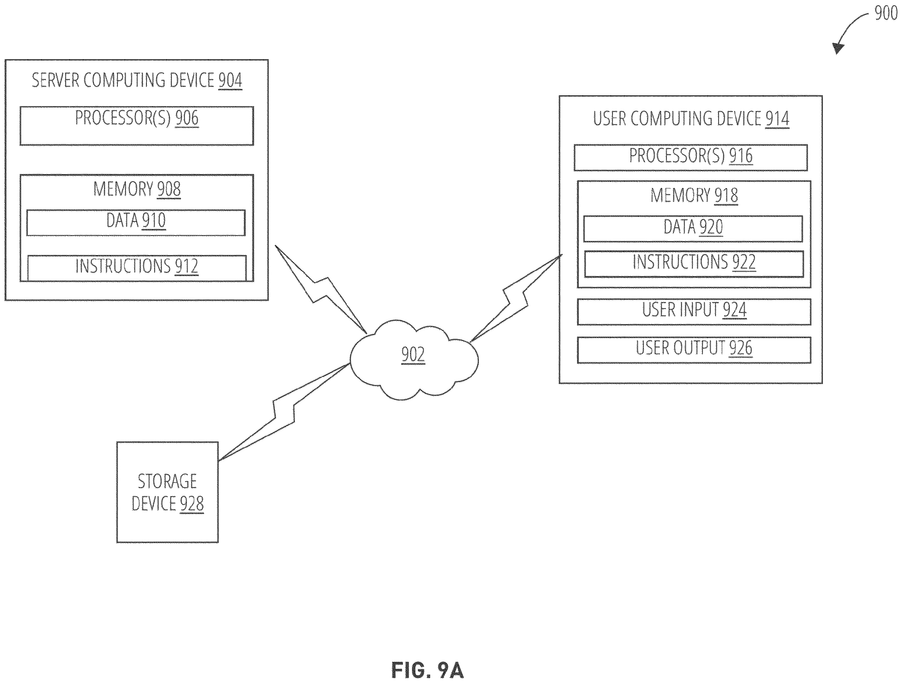

FIG. 9A illustrates an example system in which the features described above may be implemented. It should not be considered limiting the scope of the disclosure or usefulness of the features described herein. In this example, system 900 may include device(s) 914, server computing device 904, storage device 928, and network 902.

Each of devices 914 may include one or more processor 916, memory 918, data 920 and instructions 922. Each of devices 914 may also include an output 926, and user input 924.

Memory 918 of devices 914 may store information that is accessible by processor 916. Memory 918 may also include data 920 that can be retrieved, manipulated or stored by the processor 916. The memory 918 may be of any non-transitory type capable of storing information accessible by the processor 916, including a non-transitory computer-readable medium, or other medium that stores data that may be read with the aid of an electronic device, such as a hard-drive, memory card, read-only memory ("ROM"), random access memory ("RAM"), optical disks, as well as other write-capable and read-only memories. Memory 918 may store information that is accessible by the processors 916, including instructions 922 that may be executed by processors 916, and data 920.

Data 920 may be retrieved, stored or modified by processors 916 in accordance with instructions 922. For instance, although the present disclosure is not limited by a particular data structure, the data 920 may be stored in computer registers, in a relational database as a table having a plurality of different fields and records, XML documents, or flat files. The data 920 may also be formatted in a computer-readable format such as, but not limited to, binary values, ASCII or Unicode. By further way of example only, the data 920 may comprise information sufficient to identify the relevant information, such as numbers, descriptive text, proprietary codes, pointers, references to data stored in other memories (including other network locations) or information that is used by a function to calculate the relevant data.

The instructions 922 can be any set of instructions to be executed directly, such as machine code, or indirectly, such as scripts, by the processor 916. In that regard, the terms "instructions," "application," "steps," and "programs" can be used interchangeably herein. The instructions 922 can be stored in object code format for direct processing by the processor 916, or in any other computing device language including scripts or collections of independent source code modules that are interpreted on demand or compiled in advance. Functions, methods and routines of the instructions 922 are explained in more detail below.

The one or more processors 916 may include any conventional processors, such as a commercially available CPU or microprocessor. Alternatively, the processor 916 can be a dedicated component such as an ASIC or other hardware-based processor. Although not necessary, computing devices may include specialized hardware components to perform specific computing functions faster or more efficiently.

Although FIG. 9A functionally illustrates the processor 916, memory 918, and other elements of devices 914 as being within the same respective blocks, it will be understood by those of ordinary skill in the art that the processor 916 or memory 918 may actually include multiple processors or memories that may or may not be stored within the same physical housing. Similarly, the memory 918 may be a hard drive or other storage media located in a housing different from that of the devices 914. Accordingly, references to a processor 916 or device 914 will be understood to include references to a collection of processors or devices or memories that may or may not operate in parallel.

Output 926 may be a display, such as a monitor having a screen, a touchscreen, a projector, or a television. The display of the one or more computing devices may electronically display information to a user via a graphical user interface ("GUI") or other types of user interfaces. For example, as will be discussed below, the display may electronically display anomaly alerts.

The user input 924 may be a mouse, keyboard, touchscreen, microphone, or any other type of input.

The devices 914 can be at various nodes of a network 902 and capable of directly and indirectly communicating with other nodes of network 902. Although a single computing device 914 is depicted in FIG. 9A, it should be appreciated that a typical system can include one or more computing devices 914, with each computing device being at a different node of network 902. The network 902 and intervening nodes described herein can be interconnected using various protocols and systems, such that the network can be part of the Internet, World Wide Web, specific intranets, wide area networks, or local networks. The network 902 can utilize standard communications protocols, such as WiFi, Bluetooth, 4G, 5G, etc., that are proprietary to one or more companies. Although certain advantages are obtained when information is transmitted or received as noted above, other aspects of the subject matter described herein are not limited to any particular manner of transmission.

In one example, system 900 may include one or more server computing devices 904 having a plurality of computing devices, e.g., a load balanced server farm, that exchange information with different nodes of a network for the purpose of receiving, processing and transmitting the data to and from other computing devices. For instance, one or more server computing devices 904 may be a web server that is capable of communicating with the one or more client computing devices via the network. In addition, server computing device 904 may use network 920 to transmit and present information to a user of one of the other computing devices. Server computing device 904 may include one or more processors 906, memory 908, instructions 912, data 910, location sensors, etc. These components operate in the same or similar fashion as those described above with respect to computing devices 914.

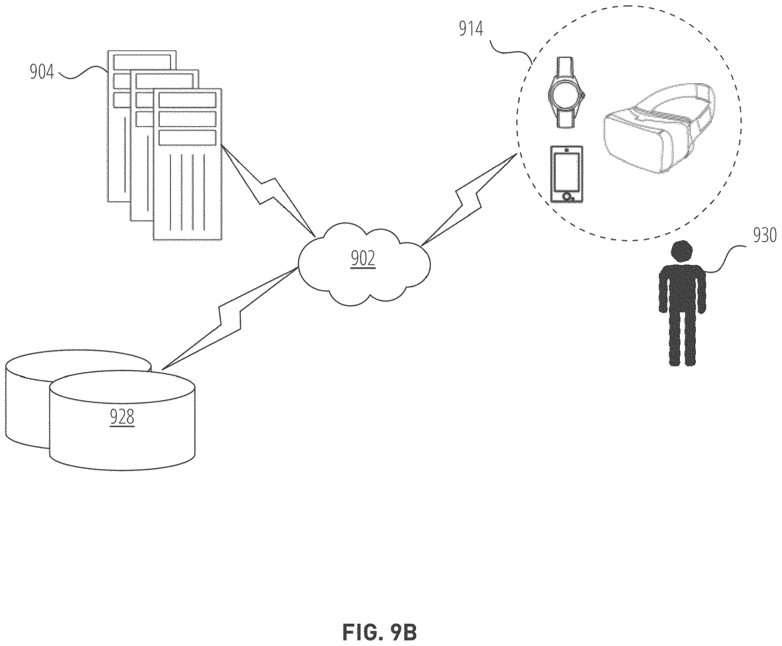

As shown in FIG. 9B, each device 914 may be a personal computing device intended for use by a respective user, and have all of the components normally used in connection with a personal computing device including one or more processors (e.g., a central processing unit (CPU)), memory (e.g., RAM and internal hard drives) storing data and instructions, an output, such as a display (e.g., a monitor having a screen, a touch-screen, a projector, a television, or other device such as a smart watch display that is operable to display information), and user input devices (e.g., a mouse, keyboard, touchscreen or microphone). The devices 914 may also include a camera for recording video streams, speakers, a network interface device, and all of the components used for connecting these elements to one another. Devices 914 may be capable of wirelessly exchanging or obtaining data over the network 902.

Although the client computing devices 914 may each comprise a full-sized personal computing device, they may alternatively comprise mobile computing devices capable of wirelessly exchanging data with a server over a network such as the Internet. By way of example only, devices 914 may be mobile phones or devices such as a wireless-enabled PDA, smartphones, a tablet PC, laptop, home assistant device, a wearable computing device (e.g., a smartwatch, AR/VR headset, smart helmet, etc.), or a netbook that is capable of obtaining information via the Internet or other networks.

Storage device 928 may store various types of information. For instance, the storage device 928 may store data or information related to anomalies, such as different topics and associated values. For example, the storage device 928 may store data or information related to the number of clicks, searches, views, policy violations, advertisements, etc. for a given topic. Storage device 928 may store data related to anomalies based on predetermined periods of time such that the information may be easily compared to determine the direction and depth of the anomaly.

While FIG. 9A and FIG. 9B illustrate a single user 930 and their respective device(s) device 914, it should be understood that there may be multiple users and their respective devices.

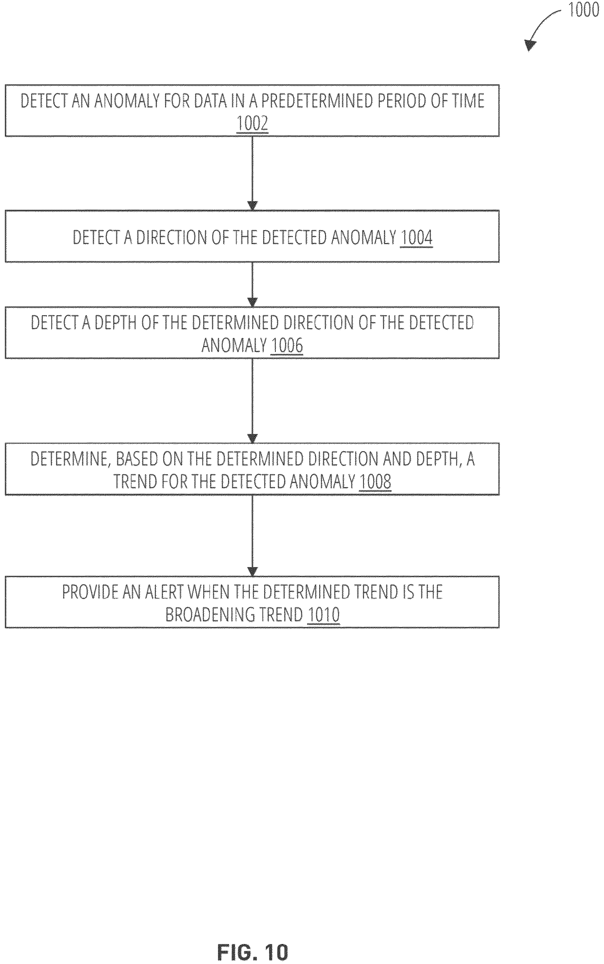

FIG. 10 illustrates an example method for providing an alert for an anomaly. The following operations do not have to be performed in the precise order described below. Rather, various operations can be handled in a different order or simultaneously, and operations may be omitted.

In block 1002, an anomaly may be detected. The anomaly may be detected for data in a predetermined period of time. The period of time may be a minute, hours, day, week, month, year, etc. The anomaly may be, in some examples, for the number of clicks, searches, policy violations, advertisements selected, etc.

In block 1004, a direction of the detected anomaly may be determined. The direction of the anomaly may include a positive direction or a negative direction. The positive direction may indicate that the detected anomaly is normalizing. Normalizing may correspond to the anomaly moving toward an expected value. The negative direction may indicate that the detected anomaly is broadening. Broadening may correspond to the anomaly moving away from the expected value.

According to some examples, the direction of the detected anomaly may be determined by comparing the detected anomaly in the predetermined period of time to a previous value for previous data from a previous predetermined period of time. For example, the detected direction may be positive when the detected anomaly is normalizing as compared to the previous value. According to some examples, the detected direction may be the negative direction when the detected anomaly is broadening as compared to the previous value.

In block 1006, a depth of the determined direction of the detected anomaly may be determined. The depth of the determined direction may be, for example, a magnitude of the direction as compared to a threshold. The threshold may be the value of the detected anomaly. According to some examples, the depth of the direction may be determined by comparing the detected anomaly in the predetermined period of time to a second broader period of time that includes the predetermined period of time. For example, the depth of the direction may be determined by comparing the detected anomaly in a first period of time, such as a week, to a second broader period of time, such as a month that includes that week.

In block 1008, a trend for the detected anomaly is determined based on the direction and depth of the anomaly. The trend may be a normalizing trend or a broadening trend. Determining the trend may include determining whether the detected or depth broadens the detected anomaly. For example, when the detected direction broadens the detected anomaly and the detected depth normalizes the detected anomaly, the trend may be a broadening trend. In another example, when both the detected direction and detected depth broadens the detected anomaly, the trend may be a broadening trend.

In block 1010, an alert may be provided when the trend is a broadening trend. The alert may be a message, such as a text message or an email, providing an indication that a broadening anomaly was detected. The alert may include information related to the anomaly, such as an indication of the topic for which an anomaly was detected, a variable for which the anomaly was detected, such as the number of searches, clicks, policy violations, etc. related to the topic, etc. According to some examples, the anomaly alert may include links that, when selected, provide additional information such as what is causing the trend, where the trends are being reported, a source of raw data related to the anomaly, etc.

Generating an anomaly alert in response to determining that the trend of the anomaly is a broadening trend may minimize the computational resources for generating and transmitting alerts. For example, generating an alert only when the trend is broadening may reduce the processing power for generating alerts as compared to generating alerts for all detected anomalies. Additionally or alternatively, transmitting an alert only when the trend is broadening may reduce the bandwidth used to transmit alerts as compared to transmitting an alert for all detected anomalies. Further, generating and transmitting an alert when the trend of the anomaly is broadening may provide specific, actionable alerts that allow users to address only anomalies that are broadening, without having to consider anomalies that are normalizing.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A method, comprising:
detecting, by one or more processors, an anomaly for data in a predetermined period of time;
detecting, by the one or more processors, a direction of the detected anomaly, wherein the direction includes a positive direction or a negative direction,
wherein the positive direction indicates that the detected anomaly is normalizing,
wherein normalizing corresponds to the anomaly moving toward an expected value,
wherein the negative direction indicates that the detected anomaly is broadening, and
wherein broadening corresponds to the anomaly moving away from the expected value;
detecting, by the one or more processors, a depth of the detected direction of the detected anomaly;
determining, by the one or more processors based on the detected direction and depth, a trend for the detected anomaly, wherein the trend is a normalizing trend or a broadening trend; and
providing, by the one or more processors, an alert when the determined trend is the broadening trend.

2. The method of claim 1, wherein the depth of the determined direction of the detected anomaly is a magnitude of the direction as compared to a threshold; and optionally wherein the threshold corresponds to a value of the detected anomaly.

3. The method of any preceding claim, wherein determining the trend for the detected anomaly further includes determining, by the one or more processors, whether the detected direction or depth broadens the detected anomaly.

4. The method of claim 4, further comprising determining, by the one or more processors, the broadening trend when the detected direction broadens the detected anomaly and the detected depth normalizes the detected anomaly; or the method further comprising determining, by the one or more processors, the broadening trend when both the detected direction and the detected depth broadens the detected anomaly.

5. The method of any preceding claim, wherein detecting the direction of the detected anomaly includes comparing, by the one or more processors, the detected anomaly in the predetermined period of time to a previous value for previous data from a previous predetermined period of time.

6. The method of claim 5, wherein:
the detected direction is the positive direction when the detected anomaly is normalizing as compared to the previous value, and
the detected direction is the negative direction when the detected anomaly is broadening as compared to the previous value.

7. The method of any preceding claim, wherein detecting the depth of the determined direction includes comparing, by the one or more processors, the detected anomaly in the predetermined period of time to a second period of time that includes the predetermined period of time.

8. A system, comprising:
one or more processors, the one or more processors configured to:
detect an anomaly for data in a predetermined period of time;
detect a direction of the detected anomaly, wherein the direction includes a positive direction or a negative direction,
wherein the positive direction indicates that the detected anomaly is normalizing,
wherein normalizing corresponds to the anomaly moving toward an expected value,
wherein the negative direction indicates that the detected anomaly is broadening, and
wherein broadening corresponds to the anomaly moving away from the expected value;
detect a depth of the determined direction of the detected anomaly;
determine, based on the determined direction and depth, a trend for the detected anomaly,
wherein the trend is a normalizing trend or a broadening trend; and
provide an alert when the determined trend is the broadening trend.

9. The system of claim 8, wherein the depth of the determined direction of the detected anomaly is a magnitude of the direction as compared to a threshold; and optionally wherein the threshold corresponds to a value of the detected anomaly.

10. The system of claim 8 or 9, wherein when determining the trend for the detected anomaly the one or more processors are further configured to determine whether the detected direction or depth broadens the detected anomaly.

11. The system of claim 10, wherein the one or more processors are further configured to determine the broadening trend when the detected direction broadens the detected anomaly and the detected depth normalizes the detected anomaly; or
wherein the one or more processors are further configured to determine, by the one or more processors, the broadening trend when both the detected direction and the detected depth broadens the detected anomaly.

12. The system of any of claims 8 to 11, wherein when detecting the direction of the detected anomaly the one or more processors are further configured to compare the detected anomaly in the predetermined period of time to a previous value for previous data from a previous predetermined period of time.

13. The computing apparatus of claim 12, wherein:
the detected direction is the positive direction when the detected anomaly is normalizing as compared to the previous value, and
the detected direction is the negative direction when the detected anomaly is broadening as compared to the previous value.

14. The computing apparatus of any of claims 8 to 13, wherein when detecting the depth of the determined direction the one or more processors are further configured to compare the detected anomaly in the predetermined period of time to a period of time including the predetermined period of time.

15. A computer-readable storage medium, the computer-readable storage medium including instructions that when executed by one or more processors, cause the one or more processors to carry out the method of any of claims 1 to 7.
